# EUROPEAN PATENT SPECIFICATION

(11) **EP 4 437 037 B1**
(45) Date of publication and mention of the grant of the patent: **31.12.2025**
(21) Application number: 22822657.7
(22) Date of filing: 24.11.2022
(51) Int. Cl.: C08L 7/00, B60C 1/00

(54) **TIRES FOR VEHICLE WHEELS**
REIFEN FÜR FAHRZEUGRÄDER
PNEUMATIQUES POUR ROUES DE VÉHICULE

(30) Priority: 25.11.2021 IT 202100029831
(43) Date of publication of application: 02.10.2024
(73) Proprietor: Pirelli Tyre S.p.A., 20126 Milano (IT)
(72) Inventor: GIANNINI, Luca, 20126 Milano (IT); TADIELLO, Luciano, 20126 Milano (IT); GUERRA, Silvia, 20126 Milano (IT)
(74) Representative: PGA S.p.A.
(86) International application number: PCT/IB2022/061389
(87) International publication number: WO 2023/095054

(56) References cited:
- WO-A1-2014/097108
- WO-A1-2017/109672
- US-A- 2 845 397
- US-A- 3 296 158

## Description

### FIELD OF THE INVENTION

The present invention relates to a tire for vehicle wheels. More particularly the present invention refers to a tire for vehicle wheels which comprises at least one structural component comprising a reinforcing element constituted by an elongate element coated with, or embedded in, a vulcanised elastomeric compound obtained by vulcanising an elastomeric composition comprising a predispersion of a diene elastomeric polymer and lignin and carbon nanotubes.

### PRIOR ART

A tire for vehicle wheels typically comprises a carcass structure comprising at least one carcass layer having opposite lateral edges associated with respective bead structures, a belt structure applied in radially outer position to the carcass structure, and a tread band arranged in radially outer position to the belt structure.

The carcass structure is intended, in addition to sustain the weight of the vehicle, to resist the inflation pressure and all the lateral and longitudinal stresses to which the rolling tire is subjected following the contact with the road surface.

The belt structure is intended to transfer, to the carcass structure, the aforesaid lateral and longitudinal stresses and contributes to conferring the desired characteristics of structural strength, adherence, driving stability, controllability, directionality, road holding, comfort and to maintain these performances over time.

The bead structures are intended to sustain the circumferential, transverse and combined stresses that are transmitted between the rim of the wheel and tire during the normal use conditions, e.g. in acceleration, braking and during turning, possibly also at high speed.

Typically, in the carcass and belt structures of the tire, and in several components of the bead structures (e.g. chafers and flippers), reinforcing elements are present that are constituted by an elongate element of various nature - metallic or polymeric - embedded in a vulcanised elastomeric compound matrix, for the purpose of stiffening the structure of the tire, at the same time seeking the best property balancing.

The elongate elements made of polymeric material are generally made with wires of polyester, rayon, lyocell and polyamide, while the elongate elements of metallic material are generally made with steel wires, preferably coated with a metal alloy, such as for example alloys of copper/zinc, zinc/manganese, zinc/molybdenum/cobalt, and the like.

The vulcanised elastomeric compound matrix is attained through the vulcanisation of an elastomeric composition comprising at least one diene elastomeric polymer, at least one reinforcing filler and at least one reinforcing resin comprising a methylene acceptor associated with at least one methylene donor compound, for the purpose of improving the characteristics of the obtained crosslinked products, in particular the mechanical properties.

Due to its high reinforcement efficiency, the carbon black is a reinforcing filler that is particularly used. The carbon black nevertheless represents a non-renewable raw material, mainly deriving from the processes of partial combustion of fossil fuels, mainly naphtha, methane gas, and other hydrocarbons. In addition, the carbon black can be a subject of concern for the environment since it constitutes a potential pollutant agent, if not correctly disposed of. The substitution or reduction of the use of the carbon black therefore represents an objective not only of interest for tire manufacturers, but also of common interest for the community.

The Applicant has perceived the need to provide tires and their components that are more eco-sustainable and eco-compatible, for example, by means of the reduction or the substitution of raw materials coming from oil with raw materials produced from renewable sources, with the object of maintaining and possibly improving the performances of the tire.

Among the biopolymers that are most abundant from renewable sources, for application in tires, it is possible to mention as an example starch, cellulose, lignin, and hemicellulose. In the past, various attempts have been made in order to be able to use as reinforcing agents several of these materials, which also have a lower specific weight than the conventional reinforcing fillers. Lignin, for example, was used as is or modified in various modes, as reinforcing filler in tire compounds.

Lignin is a complex organic polymer having a three-dimensional polymer structure constituted by phenylpropane units and belonging to the class of the so-called phenylpropanoid compounds.

Lignins have compositions and molecular weights that are very different from each other both as a function of the selected biomass and of the process with which they are obtained. The composition varies in terms both of functional groups, mainly of the phenol, hydroxyl and carboxyl type, and in terms of molecular weight.

Tires for vehicle wheels comprising lignin are described in the patent applications US2010/0204368, WO2009/145784, JP2008/308615, JP2010/242023, JP2010/248282, JP2014/129509, CN102718995, CN103756060, WO2014/097108, WO2017/109672, IT102020000032627, and in the patents GB723751, GB836393, US2610954, US2802815, US2906718, US3079360, US3163614, US3282871, US3296158, US3312643, US3364158, US3817974, US3984362 and US3991022.

In a vehicle equipped with tires in which the carbon black is partially substituted with lignin, a phenomenon of static electricity accumulation is generated since the lignin, contrary to the carbon black, is not conductive, and hence does not allow the grounding to earth of the static electricity generated by the rolling of the wheels and by the consequent movement of the vehicle.

For the purpose of overcoming such drawback, which is manifested even when one substitutes the carbon black with other non-conductive materials, for example silica-based reinforcing fillers, tire manufacturers had to attain additional processes and/or components. For example, tires were made comprising a conductive strip, attained with compounds comprising carbon black or other conductive materials, immersed in the tread structure and/or sidewalls, for the purpose of attaining the suitable grounding of the vehicle.

Embodiments of such tires are described in EP658452 in the name of the same Applicant. The attainment of such conductive strip involves greater complexity. From the production standpoint, the attainment of such strip requires the use of an additional passage and of a more complex apparatus in the extrusion of the compound which will come to form the tread of the tire. From the structural standpoint, the presence of such strip, constituting a chemical-physical separation element within the elastomeric material, requires the use of a particular compound in order to prevent triggering phenomena of premature wear, reducing the kilometric performance of the tire.

In order to overcome such drawback, it was proposed to incorporate carbon nanotubes in the compound, in order to restore the correct conductivity of the tire. Embodiments of such tires and/or of compounds for tire components containing carbon nanotubes are described in WO2018/109661, EP2338697, DE10/2007/056689, and WO03/060002. The addition of carbon nanotubes however involves, analogous to the presence of carbon black, an increase of the hysteresis, with consequent increase of the rolling resistance of the tire, and of the fuel consumptions.

### SUMMARY OF THE INVENTION

The Applicant conducted an intensive activity of research for the purpose of finding the manner to use lignin for attaining tire compounds which led to the filing of international patent applications published with the number WO2014/097108 and WO2017/109672.

WO2014/097108 relates to a tire for vehicle wheels comprising at least one structural component comprising a crosslinked elastomeric material obtained by vulcanisation of an elastomeric composition comprising (a) at least one diene elastomeric polymer; (b) at least one carbon black reinforcing filler; and (c) at least one functionalised lignin selected from among the group that consists of esterified lignin and etherified and esterified lignin.

WO2017/109672 relates to a tire for vehicle wheels comprising at least one structural component comprising a crosslinked elastomeric material obtained by vulcanisation of an elastomeric composition comprising a predispersion of natural rubber and lignin obtained via co-precipitation from latex, wherein said predispersion comprises a quantity of lignin such to supply in the elastomeric composition a concentration of lignin equal to or lower than about 25 phr.

In addition, the Applicant has recently found and described in the patent application IT 102020000032627 which is possible to obtain a predispersion of a diene elastomeric polymer and lignin comprising high quantities of lignin, in particular equal to or greater than 45 phr, with the advantage of having a greater flexibility of formulation of the vulcanisable elastomeric compositions.

Continuing the experimentation in this field, the Applicant surprisingly found that the use of the predispersions described in the patent applications WO2017/109672 and IT102020000032627 in partial substitution of the carbon black in the elastomeric compositions typically used for rubber-covering reinforcing elements for tires led to a substantial reduction of the hysteresis of the compositions themselves, with consequent reduction of the dissipation of energy during the use of the tire in operation, and of the consumption of fuel without negatively affecting the mechanical properties of the vulcanised compound, and improving the adhesion thereof to the textile and/or metallic elongate element used for attaining the reinforcing element, as described in the patent application 102021000029213.

Finding that the addition of the predispersion of lignin caused a reduction of the conductivity of the resulting compound, the Applicant also surprisingly observed that the addition of carbon nanotubes allowed recovering the conductivity without negatively affecting the hysteresis, and simultaneously further improving the mechanical and adhesion properties of the rubber-covering compound.

Therefore, in a first aspect, the present invention refers to a tire for vehicle wheels which comprises at least one structural component comprising at least one reinforcing element constituted by an elongate element coated with, or embedded in, a vulcanised elastomeric compound obtained by vulcanising an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from O to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
in which at least 50 phr of said diene elastomeric polymer is constituted by natural or synthetic isoprene rubber.

In a second aspect, the present invention relates to a structural component for tire comprising at least one reinforcing element constituted by an elongate element coated with, or embedded in, a vulcanised elastomeric compound obtained by vulcanising an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
in which at least 50 phr of said diene elastomeric polymer is constituted by natural or synthetic isoprene rubber.

In a third aspect, the present invention relates to a reinforcing element constituted by an elongate element coated with, or embedded in, a vulcanised elastomeric compound obtained by vulcanising an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
in which at least 50 phr of said diene elastomeric polymer is constituted by natural or synthetic isoprene rubber.

In a fourth aspect, the present invention relates to an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
in which at least 50 phr of said diene elastomeric polymer is constituted by natural or synthetic isoprene rubber.

### DEFINITIONS

With the term "elastomeric composition" it is intended a composition, comprising at least one diene elastomeric polymer and one or more additives, which via mixing and possible heating provide an elastomeric compound that is suitable for use in tires and their components.

The components of the elastomeric composition are not generally introduced into the mixer simultaneously but typically are added in sequence. In particular, the vulcanisation additives, such as the vulcanising agent and possibly the accelerants and the retardants, are usually added in a step downstream with respect to the incorporation and processing of all the other components.

In the vulcanisable elastomeric compound, the single components of the elastomeric composition can be altered or no longer individually traceable since they have been completely or partly modified, due to the interaction with the other components, of the heat and/or of the mechanical processing. With the term "elastomeric composition", it is intended herein to include all the components which are used in the preparation of the elastomeric compound, independent of whether they are actually present simultaneously, or introduced sequentially or traceable in the elastomeric compound or in the final tire.

With the term "elastomeric polymer" it is intended a natural or synthetic polymer which, after vulcanisation, can be repeatedly stretched at room temperature to at least double its original length and after removal of the traction load return, substantially immediately and with force, to its approximately original length (according to the definitions of the norm ASTM D1566-11 Standard terminology relating to Rubber).

With the term "diene elastomeric polymer" it is intended a polymer or copolymer which derives from the polymerisation of one or more different monomers, among which at least one of these is a conjugated diene (conjugated diolefin).

With the term "elastomeric compound" it is intended the mixture obtainable via mixing and possible heating of at least one elastomeric polymer with at least one of the additives commonly employed in the preparation of compounds for tires.

With the term "vulcanisable elastomeric compound" it is intended the elastomeric mixture ready for vulcanisation, obtainable via incorporation in an elastomeric compound of all the additives, including those of vulcanisation.

With the term "vulcanised elastomeric compound" it is intended the material obtainable via vulcanisation of a vulcanisable elastomeric compound.

With the term "green" it is intended a material, a compound, a composition, a component or a tire that are not yet vulcanised.

With the term "vulcanisation" it is intended the crosslinking reaction in a natural or synthetic rubber induced by a crosslinking agent, typically sulfur-based.

With the term "vulcanisation agent" it is intended a compound capable of transforming the natural or synthetic rubber into elastic and resistant material, due to the formation of a three-dimensional network of inter- and intramolecular bonds. Typical vulcanisation agents are sulfur-based compounds such as elementary sulfur, polymeric sulfur, sulfur donor agents such as bis[(trialkoxysilyl)propyl]polysulphides, thiurams, dithiodimorpholines and caprolactam-disulphide.

With the term "vulcanisation accelerant" it is intended a compound capable of decreasing the duration of the vulcanisation process and/or the operating temperature, such as for example sulphenamides, thiazoles, dithiophosphates, dithiocarbamates, guanidines, as well as sulfur donors such as thiurams.

With the term "vulcanisation activating agent" it is intended a compound capable of further facilitating the vulcanisation, making it occur in shorter times and possibly at lower temperatures. One example of an activating agent is the stearic acid - zinc oxide system.

With the term "vulcanisation retardant" it is intended a compound capable of slowing the onset of the vulcanisation reaction and/or suppressing undesired secondary reactions, e.g. N-(cyclohexylthio) phthalimide (CTP)

With the term "vulcanisation package" it is intended the vulcanisation agent and one or more vulcanisation additives selected from among vulcanisation activating agents, accelerants and retardants.

With the term "reinforcing filler" it is intended a reinforcing material typically employed in the field in order to improve the mechanical properties of the tires, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

With the term "mixing step (1)", it is intended the step of the process of preparation of the elastomeric compound in which - via mixing and possibly heating - one or more additives can be incorporated, except for the vulcanisation agent that is suppled in step (2). The mixing step (1) is also termed "non-productive step". In the preparation of a compound, there can be multiple "non-productive" mixing steps that can be indicated with 1a, 1b, etc.

With the term "mixing step (2)", it is intended the step following the process of preparation of the elastomeric compound in which the vulcanising agent and, possibly, the other additives of the vulcanisation packet are introduced into the elastomeric compound obtained from step (1), and mixed into the material, at controlled temperature, generally at a compound temperature lower than 120°C, so as to provide the vulcanisable elastomeric compound. The mixing step (2) is also termed "productive step".

The term "structural component" of a tire indicates any one layer of elastomeric material of the tire including reinforcing elements. A structural component of a tire can be a layer included in a reinforcing structure (e.g. carcass structure or belt structure) or it can be a reinforcement layer (e.g. zero-degree belt layer, bead reinforcement layer or "flipper", sidewall reinforcement layer or "chafer").

The term "reinforcing element" of a tire indicates any one elongate element of textile or metallic material immersed in a vulcanised elastomeric compound.

The term "elongate element" represents the element constituted by one or more long-shaped elements, possibly twisted together, made of textile or metallic material. The elongate element is also termed cord.

The term "radial carcass structure" indicates a carcass structure comprising a plurality of reinforcing elements, each of which lying substantially along a respective plane passing through the radius of the tire. Such reinforcing elements can be incorporated in a single carcass ply or in multiple carcass plies (preferably two) that are radially superimposed on each other.

The terms "radial" and "axial" and the expressions "radially inner/outer" and "axially inner/outer" are used with reference respectively to a direction substantially parallel to an equatorial plane of the tire and to a direction substantially perpendicular to the equatorial plane of the tire, i.e. respectively to a direction substantially perpendicular to the rotation axis of the tire and to a direction substantially parallel to the rotation axis of the tire.

The term "cross belt structure" indicates a belt structure comprising a first belt layer including reinforcing elements substantially parallel to each other and inclined with respect to the equatorial plane of the tire by a pre-established angle and at least one second belt layer arranged in radially outer position with respect to the first belt layer and including reinforcing elements substantially parallel to each other but lying, with respect to the equatorial plane of the tire, with inclination opposite that of the reinforcing elements of the first layer.

The term "zero-degree belt structure" indicates a reinforcing layer comprising at least one reinforcing element wound on the belt structure according to a winding direction that is substantially circumferential, i.e. according to a winding direction having an inclination lower than 6° with respect to the equatorial plane of the tire.

The terms "circumferential" and "circumferentially" are used with reference to the direction of the annular extension of the tire, i.e. to the tire rolling direction, which corresponds to a direction lying on a plane coinciding with or substantially parallel to the equatorial plane of the tire.

With "substantially axial direction" it is intended a direction inclined, with respect to the equatorial plane of the tire, by an angle comprised between about 70° and about 90°.

With "substantially circumferential direction" it is intended a direction stretched, with respect to the equatorial plane of the tire, by an angle comprised between about 0° and about 10°.

For the purpose of the present description and for the following claims, the term "phr" (acronym of parts per hundred rubber) indicates the parts by weight of a given component of elastomeric compound per 100 parts by weight of the elastomeric polymer, considered free of possible extension oils.

Where not otherwise indicated, all the percentages are expressed as percentages by weight.

### The predispersion of diene elastomeric polymer and lignin

Preferably, the diene elastomeric polymer of the predispersion according to the present invention is any one diene elastomeric polymer as described in the following present description.

More preferably, the diene elastomeric polymer is selected from among natural (NR) or synthetic (IR) isoprene rubber, styrene-butadiene rubber with polymerisation in emulsion (ESBR), styrene-butadiene rubber with carboxylated polymerisation in emulsion (XSBR), nitrile rubber (NBR), carboxylated nitrile rubber (XNBR), chloroprene rubber (CR), butyl rubber (IIR).

Advantageously, the diene elastomeric polymer is selected from among isoprene natural rubber (NR) or synthetic rubber (IR).

Preferably, the predispersion of diene elastomeric polymer and lignin comprises a quantity of lignin equal to or greater than about 45 phr, preferably equal to or greater than about 50 phr, still more preferably equal to or greater than about 60 phr up to a maximum value of about 160 phr.

According to a preferred embodiment, the predispersion of diene elastomeric polymer and lignin is added to the elastomeric composition in a quantity such to provide the elastomeric composition itself with 100 to 20 phr of diene elastomeric polymer, advantageously 100 to 30 phr of diene elastomeric polymer, the complement to 100 phr being provided by diene elastomeric polymer added separately.

According to the invention at least 50 phr, preferably at least 60 phr, more preferably at least 70 phr, and still more preferably at least 80 phr of the diene elastomeric polymer of the elastomeric composition is constituted by natural or synthetic isoprene rubber, preferably natural isoprene rubber. Advantageously, the resulting elastomeric composition comprises from 90 phr to 100 phr of natural or synthetic isoprene rubber, preferably natural isoprene rubber.

According to a preferred embodiment, the predispersion of diene elastomeric polymer and lignin is added to the elastomeric composition in a quantity such to provide the elastomeric composition itself with a quantity of lignin greater than 20 phr, preferably equal to or greater than 25 phr of lignin, more preferably comprised between 30 phr and 60 phr of lignin, advantageously between 30 phr and 50 phr of lignin.

Preferably, the lignin is selected in the group comprising Softwood Kraft lignin, Hardwood Kraft lignin, Soda Grass lignin, Wheat Straw lignin, Rice Husk lignin, lignin obtained by biorefinery processes, Organosolv lignin.

Preferably, the predispersion of diene elastomeric polymer and lignin is prepared according to the process described in WO2017/109672 or IT102020000032627.

In particular, in one embodiment as described in WO2017/109672, the predispersion of diene elastomeric polymer and lignin is obtained with a process comprising:
(a) adding the lignin to a natural rubber latex,
(b) causing the co-precipitation (coagulation) of the predispersion of natural rubber and lignin from the mixture resulting from the step (a), and
(c) separating the predispersion of natural rubber and lignin obtained from step (b) from a residual supernatant.

Preferably, the lignin is solubilised in an alkaline solution before the addition to the natural rubber latex.

In particular, the alkaline solution comprises an aqueous solution of a base, preferably selected from the group which comprises alkaline metal hydroxides, such as for example, sodium hydroxide (NaOH) or potassium hydroxide (KOH), and ammonia (NH₃), in concentration comprised between 0.01M and 1M, preferably between 0.1M and 0.5M. The basic conditions of the solution ensure the deprotonation of the acid groups of the lignin (phenols and carboxylic acids), and the negative charges make the lignin macromolecules soluble and stable in aqueous solution. The addition of the lignin to the basic solution is preferably carried out under stirring and at room temperature until complete solubilisation.

The addition of the lignin to the latex is preferably conducted slowly and under stirring, and at room temperature, in a variable time, preferably comprised between 5 and 15 minutes, and the resulting mixture is left under stirring at room temperature for a variable time, preferably comprised between 1 and 2 hours.

The co-precipitation (coagulation) from the resulting mixture occurs via addition of an acidic solution.

In particular, the acidic solution comprises an aqueous solution of an acid, preferably selected from the group which comprises inorganic acids, such as for example hydrochloric or sulphuric acid, and organic acids, such as for example acetic acid, in a concentration comprised between 0.1M and 2M, preferably between 0.5M and 1.5M.

Advantageously, in another embodiment as described in IT102020000032627, the predispersion of diene elastomeric polymer and lignin is obtained with a process comprising:
a) preparing in a dispersing liquid a first suspension of lignin having a value of a median particle diameter D50 equal to or less than 10 microns, preferably equal to or less than 5 microns, more preferably, equal to or less than 2 microns;
b) preparing a second suspension comprising lignin and diene elastomeric polymer latex by mixing the first lignin suspension obtained from step a) with said latex; and
c) removing the dispersing liquid from said second suspension comprising lignin and diene elastomeric polymer latex until said predispersion of diene elastomeric polymer and lignin is obtained.

In a particularly preferred embodiment, step a) of preparing said first lignin suspension comprises
a1) preparing in the dispersing liquid a crude suspension of lignin having a value of a median particle diameter D50 equal to or greater than 10 microns, more preferably equal to or greater than 20 microns;
a2) wet-grinding the lignin particles contained in said crude suspension until the median diameter D50 of the lignin particles is reduced to said value equal to or less than 10 microns.

In preferred embodiments, in the process of preparing a predispersion of a diene elastomeric polymer and lignin, step a) of preparing the first lignin suspension or step a1) of preparing the crude lignin suspension comprises adding to such suspension a metered amount of at least one surfactant.

Preferably, the surfactant is an anionic surfactant, such as sodium lauryl sulphate (SLS), lauryl ethoxy sulphate (LES), alkyl-benzene-sulphonic acids (ABS) and salts thereof. More preferably, the surfactant is sodium dodecylbenzenesulphonate, a widely available low cost anionic surfactant.

Preferably, step a) of preparing the first lignin suspension or step a1) of preparing the crude lignin suspension comprises adding to the first lignin suspension an amount of surfactant comprised between 0.1 and 60 parts by weight, preferably between 1 and 10 parts by weight, per 100 parts by weight of total suspension.

Preferably, the first lignin suspension or the aforementioned crude lignin suspension has a solid residue comprised between 20% and 80% by weight, preferably between 30% and 70% by weight, with respect to the overall weight of the suspension.

In a preferred embodiment, the crude suspension of lignin may be obtained by diluting lignin having a moisture content of between 1 and 60% with a suitable amount of liquid dispersant in order to obtain a suspension with a solid residue of between 20% and 80% by weight, more preferably of between 30% and 70% by weight with respect to the total weight of the crude suspension.

Preferably, step a2) of the aforementioned preferred predispersion preparation process involves wet-grinding the lignin particles contained in the crude lignin suspension until the median diameter D50 of the lignin particles is reduced to a value equal to or less than 5 microns, more preferably equal to or less than 2 microns.

Preferably, the first lignin suspension obtained from step a) has a % by weight of particles having a size greater than 10 microns equal to or less than 10% by weight, more preferably, equal to or less than 2% by weight.

In a preferred embodiment, step a2) of wet-grinding the lignin particles contained in the crude lignin suspension is carried out by means of a grinding apparatus selected from ball mills, hammer mills, blade mills, roller mills, highpressure compression mills, ring mills, vibrating rod or tube mills, centrifugal fluid mills, preferably ball mills.

Preferably, the diene elastomeric polymer latex has a solid residue of between 10% and 80% by weight, more preferably between 50% and 70% by weight, with respect to the total weight of the latex.

Preferably, the diene elastomeric polymer latex is stabilised with a weak base, for example ammonia.

Preferably, step b) of preparing the second suspension comprising lignin and diene elastomeric polymer latex is carried out by mixing from 30 to 200 parts by weight, preferably from 60 to 140 parts by weight, of the first lignin suspension obtained from step a) to 100 parts by weight of diene elastomeric polymer latex.

In a particularly preferred embodiment, step b) of preparing the second suspension comprising lignin and diene elastomeric polymer latex is carried out by mixing the first lignin suspension obtained from step a) with said latex for a time such as to obtain a substantially homogeneous second suspension.

Preferably, the mixing time is between 5 minutes and 120 minutes.

In a preferred embodiment, the mixing contemplated in step b) is carried out by means of a batch mixer with mechanical stirrer.

Preferably, step c) of removing the dispersing liquid from the second suspension comprising lignin and diene elastomeric polymer latex comprises d) drying the second suspension.

Preferably, step d) of drying the second suspension comprising lignin and diene elastomeric polymer latex is carried out until a moisture content of the predispersion of diene elastomeric polymer and lignin is brought to a value equal to or less than 5% by weight, preferably equal or less than 1% by weight.

Preferably, step d) of drying the second suspension comprising lignin and diene elastomeric polymer latex is carried out in a static oven at a temperature of between 40° and 120°C, for example 60°C, for a time between 2 and 30 hours.

In an alternative embodiment, step c) of removing the dispersing liquid from the second suspension comprising lignin and diene elastomeric polymer latex may comprise a step e) of removing part of the dispersing liquid, for example by filtration or centrifugation or decantation, before drying said second suspension.

In a preferred embodiment, the process of preparing the predispersion of diene elastomeric polymer and lignin may comprise a step f) of compacting the predispersion of diene elastomeric polymer and lignin obtained from step c).

Advantageously, this compacting step may be carried out by means of apparatuses normally used in the rubber field, such as, for example, an open roller mixer (open mill) or an internal mixer.

In this way, it is possible to obtain a semi-finished product in the form of a sheet which may be subsequently used in the operations for the production of the vulcanisable elastomeric composition which will be better described below.

Alternatively, the predispersion of diene elastomeric polymer and lignin may be used in the form of bales as conventionally occurs in the case of compositions based on elastomeric polymer.

### Diene elastomeric polymer

The diene elastomeric polymer that is used in the present invention may be selected from those commonly used in sulfur-cross-linkable elastomeric materials, which are particularly suitable for producing tires, i.e. from elastomeric polymers or copolymers with an unsaturated chain characterized by a glass transition temperature (Tg) generally lower than 20°C, preferably in the range of from 0°C to -110°C. These polymers or copolymers may be of natural origin or may be obtained by solution polymerisation, emulsion polymerisation or gas-phase polymerisation of one or more conjugated diolefins, optionally mixed with at least one comonomer selected from monovinylarenes and/or polar comonomers.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, or mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Preferably, the diene elastomeric polymer which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

A diene elastomeric polymer functionalised by reaction with suitable terminating agents or coupling agents may also be used. In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

### Carbon black.

According to a preferred embodiment, the carbon black reinforcing filler that can be used in the present invention can be selected from among those having a surface area not lower than 20 m²/g (determined by STSA - statistical thickness surface area according to ISO 18852:2005).

According to a preferred embodiment, the carbon black reinforcing filler is present in the elastomeric composition in a quantity greater than about 15 phr, preferably greater than about 20 phr. Preferably, the carbon black reinforcing filler is present in the elastomeric composition in a quantity lower than about 60 phr, preferably lower than about 50 phr.

At least one additional reinforcing filler can advantageously be added to the above-reported elastomeric composition, in a quantity generally comprised between 1 phr and 70 phr, preferably between about 10 phr and about 60 phr. The reinforcing filler can be selected from among those commonly used for crosslinked products, in particular for tires, such as for example silica, alumina, aluminosilicates, calcium carbonate, kaolin or mixtures thereof.

The silica that can be used in the present invention can generally be a pyrogenic silica, or preferably a precipitated silica, with a BET surface area (measured according to the Standard ISO 5794/1) comprised between about 50 m²/g and about 500 m²/g, preferably between about 70 m²/g and about 200 m²/g.

### Reinforcing resin

Optionally, the elastomeric composition useful present invention comprises a reinforcing resin comprising at least 0.5 phr of a methylene acceptor compound associated with at least 0.2 phr of a methylene donor compound.

According to a preferred embodiment, the reinforcing resin comprises at least 1 phr of a methylene acceptor compound associated with at least 0.4 phr of a methylene donor compound.

Preferably, the quantity of methylene acceptor compound is lower than 25 phr, preferably lower than 20 phr.

Preferably, the quantity of methylene donor compound is lower than 15 phr, preferably lower than 10 phr.

Advantageously, the quantity of methylene acceptor compound is comprised between 2.5 phr and 15 phr.

Advantageously, the quantity of methylene donor compound is comprised between 2.5 phr and 10 phr.

Preferably, the methylene acceptor compound is selected from the group that consists of resorcinol; catechol; hydroquinone; pyrogallol; phloroglucinol; 1-naphthol; 2-naphthol, phenol resins obtained by the condensation of a phenol, possibly substituted, with an aldehyde such as, for example, formaldehyde, acetaldehyde, furfural (for example, resorcinol-formaldehyde resin); modified phenol resins; phenol resins derived from products of natural origin, typically from cashew oil or from tallow oil; mixtures of the aforesaid compounds. The solid phenol resins of novolac type, i.e. with an aldehyde: phenol molar ratio lower than 1, are particularly preferred.

Preferably, the methylene donor compound is selected from the group that consists of hexamethylenetetramine (HMT); hexamethoxymethylmelamine (HMMM); formaldehyde; paraformaldehyde; trioxane; 2-methyl-2-nitro-1-propanal; substituted melamine resins, such as N-substituted oxymethylmelamine resins; glycoluril compounds such as tetramethoxymethyl glycoluril; urea-formaldehyde resins such as urea-formaldehyde butylate resins; or mixtures thereof. Hexamethylenetetramine (HMT) and hexamethoxymethylmelamine (HMMM) are particularly preferred.

### Carbon nanotubes

The elastomeric composition according to the present invention comprises from 0.1 to 10 phr, preferably from 0.1 to 5 phr, more preferably from 0.2 a 2 phr of carbon nanotubes.

The carbon nanotubes are prepared by passing a gaseous compound containing carbon, typically methane, ethylene or acetylene, through a catalyst based on metallic nanoparticles at high temperatures (equal to or greater than 500°C, typically around 700°C).

The catalysts typically employed have Fe-Ni, Fe-Co, or Fe-Mo based supported on SiO₂, Al₂O₃ or MgO, and are typically prepared with the techniques of impregnation, co-precipitation and sol-gel. In the impregnation technique, the support is preformed, while in the techniques of co-precipitation and sol-gel both the support and the catalyst are formed by starting from salts with soluble components, such as for example nitrates and/or carbonates, causing the co-precipitation thereof by the addition of suitable basic substances. In the sol-gel technique, the formation of the gel is typically attained by the addition of gelling organic substances.

Examples of preparation of catalysts employed for the synthesis of carbon nanotubes are described in Avdeeva, L.B. et al., "Iron-containing catalysts of methane decomposition: accumulation of filamentous carbon", Applied Catalysis A: General 228, 53-63 (2002), Reshetenko, T.V. et al., "Coprecipitated iron-containing catalysts (Fe-Al2O3, Fe-Co-Al2O3, Fe-Ni-Al2O3) for methane decomposition at moderate temperatures: Part II. Evolution of the catalysts in reaction", Applied Catalysis A: General 270, 87-99 (2004), Kukovecz, A. et al., "Catalytic synthesis of carbon nanotubes over Co, Fe and Ni containing conventional and sol-gel silica-aluminas", Physical Chemistry Chemical Physics 2, 3071-3076 (2000) and in the patent applications WO2007/93337, WO2007/33438 and EP2213369.

Examples of preparation of carbon nanotubes with the aforesaid catalysts are also described in patents and patent applications, such as for example EP1797950, EP2223743, US7923615, US8398949, US2001/0014307 and WO2013/105779.

Advantageously, the elastomeric composition according to the present invention comprises carbon nanotubes prepared with the process described in WO2018/109661 characterised in that it uses an iron and/or aluminium oxide based catalyst substantially free, i.e. with a content lower than 0.1 ppm, of Co, Ni and Mo.

Commercial elements of carbon nanotubes usable in the elastomeric composition according to the present invention are those made and distributed for example by the company Nanocyl Inc., with the commercial name NC7000^{™} and by the company Ocsial Europe S.a.r.l., with the commercial name Tuball^{™}.

### Vulcanising agent

The elastomeric composition can be vulcanised according to the known techniques, in particular with sulfur-based vulcanisation systems commonly used for diene elastomeric polymers. For this purpose, in the elastomeric compound obtained from the elastomeric composition after one or more stages of thermomechanical treatment, a sulfur-based vulcanising agent is incorporated together with vulcanisation accelerants. In the final treatment step, the temperature is generally maintained lower than 120°C and preferably lower than 100°C, so as to avoid and undesired pre-crosslinking phenomenon.

Preferably, said vulcanising agent comprises sulfur-based vulcanisation systems comprising sulfur or molecules containing sulfur (sulfur donors) together with vulcanisation accelerants and/or activators that are known in the art.

The activators that are particularly effective are compounds of zinc and in particular ZnO, ZnCO₃, zinc salts of saturated or unsaturated fatty acids containing from 8 to 18 carbon atoms, such as for example zinc stearate, which are preferably formed *in situ* in the elastomeric composition from ZnO and fatty acid, or mixtures thereof.

The accelerants that are commonly used can be selected from among: dithiocarbamates, guanidine, thiourea, thiazoles, sulphenamides, thiurams, amines, xanthates or mixtures thereof.

According to a preferred embodiment, said crosslinkable elastomeric composition comprises a quantity of vulcanising agent equal to or greater than about 1 phr, preferably equal to or greater than about 2 phr.

Preferably, the quantity of vulcanising agent is lower than or equal to about 7.5 phr, preferably lower than or equal to about 7.

Advantageously the quantity of sulfur is comprised between about 2 phr and about 6.5 phr.

### Other additives

According to one embodiment, the elastomeric composition can comprise a silane coupling agent capable of interacting with silica possibly present as reinforcing filler and/or silicates and bonding them to the diene elastomeric polymer during the vulcanisation.

According to one embodiment, the silane coupling agent which can be used in the present invention, can be selected from those having at least one hydrolysable silane group, which can be identified, for example from the following general formula (II):

(R)₃Si-CₙH₂ₙ-X (II)

where the groups R, which can be identical or different, are selected from among: alkyl, alkoxy or aryloxy groups or from halogen atoms, provided that at least one of the groups R is an alkoxy or aryloxy group; n is an integer between 1 and 6, including 6; X is a group selected from among: nitrous, mercapto, amino, epoxide, vinyl, imide, chloro, -(S)ₘCₙH₂ₙ-Si-(R)₃ or -S-COR, where m and n are integers between 1 and 6, including 6, and the groups R are defined as stated above.

Among the silane coupling agents, those that are particularly preferred are bis(3-triethoxysilylpropyl) tetrasulphide and bis(3-triethoxysilylpropyl) disulphide. Said coupling agents can be used as is or as a suitable mixture with an inert filler (e.g. carbon black) so as to facilitate their incorporation in the elastomeric composition.

According to one embodiment, said silane coupling agent can be present in the elastomeric composition in a quantity comprised between 0.01 phr and about 10 phr, preferably between about 0.5 phr and about 5 phr.

Said elastomeric composition may comprise other commonly used additives, selected on the basis of the specific application for which the composition is intended. For example, said materials may be admixed with: antioxidants, anti-ageing agents, plasticisers, adhesives, anti-ozone agents, modifying resins, or mixtures thereof.

**In** particular, in order to improve the processability, said vulcanisable elastomeric composition may be admixed with a plasticiser generally selected from mineral oils, vegetable oils, synthetic oils or mixtures thereof, such as, for example, aromatic oil, naphthenic oil, phthalates, soybean oil or mixtures thereof. The amount of plasticiser generally ranges from 0 phr and about 70 phr, preferably from about 5 phr to about 30 phr.

### Preparation of the elastomeric composition

The elastomeric composition can be prepared by mixing the necessary quantity of diene elastomeric polymer with the predispersion of diene elastomeric polymer and lignin, the reinforcing filler, the carbon nanotubes, the vulcanising agent, and with the reinforcing resin and the other additives possibly present according to the techniques known in the art.

According to the invention at least 50 phr, preferably at least 60 phr, more preferably at least 70 phr, and still more preferably at least 80 phr of the diene elastomeric polymer of the elastomeric composition is constituted by natural or synthetic isoprene rubber, preferably natural isoprene rubber. Advantageously, the resulting elastomeric composition comprises from 90 phr to 100 phr of natural or synthetic isoprene rubber, preferably natural isoprene rubber.

The mixing can for example be executed by using at least one discontinuous mixer and/or at least one continuous mixer.

The predispersion of a diene elastomeric polymer and lignin may be fed to said at least one batch mixer and/or at least one continuous mixer according to any method known to those skilled in the art and suitable for the purpose.

For example, the predispersion may be fed in the form of material in bales or sheets obtained as described above in the process for preparing the predispersion.

In the context of the present description and the subsequent claims, the term "batch mixer (or mixing device)" indicates a mixing device configured to be periodically fed with the various ingredients of the material to be prepared in predefined amounts and for mixing them for a predetermined time in order to obtain a batch of said material.

At the end of the mixing step, the entire batch of material obtained is completely discharged from the mixing device in a single solution. Examples of batch mixers are internal mixers of the type with tangential rotors (Banbury^{®}) or with interpenetrating rotors (Intermix^{®}).

In the context of the present description and of the subsequent claims, the term "continuous mixer (or mixing device)" indicates a mixing device configured to continuously feed the ingredients of the material to be prepared, typically by means of controlled dosage dispensers, to mix the ingredients in order to produce the material and to discharge it in a continuous flow (except possible stoppages of the mixing device due to maintenance, or change of the recipe of the material).

In the jargon of the field of mixers for elastomeric compounds, the continuous mixing device is sometimes indicated with the term of: mixing extruder, which is considered herein to be equivalent to 'continuous mixer'.

The continuous mixer (in particular its active elements, such as screws or mixer satellites) is then provided with mixing portions able to impart a high shear stress to the material being mixed and, alternating with the mixing portions, transport portions able to impart a thrust to the material being processed to feed it from one longitudinal end to the other of the inner chamber. It may further be provided with possible redistribution portions.

Examples of continuous mixing devices are twin-screw or multi-screw mixers (e.g. ring mixers), co-penetrating and co-rotating, or planetary mixing devices.

Both the batch mixer and the continuous mixer are able to impart to the material to be produced with them sufficient energy to mix and homogeneously disperse the various components even in the case of cold feeding of the ingredients and, in the case of a material comprising an elastomeric component, to chew the elastomeric compound raising the temperature thereof so as to make it workable and plastic to facilitate the incorporation and/or distribution of the ingredients within the elastomeric polymeric matrix.

The elastomeric compound thus obtained can then be stored or started directly at the subsequent tire production steps according to the present invention.

### The reinforcing element

The reinforcing element according to the invention consists of an elongate element immersed in a vulcanised elastomeric compound obtained by vulcanising the elastomeric composition according to the invention described above.

The elongate element is also referred to as reinforcing cord or cord.

The elongate element may be made of polymeric or metallic materials.

The elongate element in polymeric material (also referred to as textile) is generally made with polyester, rayon, lyocell and polyamide threads, while the elongate element in metal is generally made with steel wires, preferably coated with a metal alloy, such as copper/zinc, zinc/manganese, zinc/molybdenum/cobalt alloys, and the like.

The elongate element may consist of a single thread, and in this case it is called "monofilament", or of a plurality of threads, and in this case it is called "multifilament".

The elongate element may comprise a single end or two or more ends stranded together, where by "end" it is meant a bundle of twisted filaments. Preferably, a single end or at least two ends twisted together are provided.

The elongate element may be made with different materials, for example it may be made with at least one metallic thread twisted with at least one textile yarn, in which case one speaks of "hybrid elongate element" or "hybrid reinforcing cord", or it may be made with at least one low modulus textile yarn, such as a nylon yarn, twisted with at least one high modulus textile yarn, such as an aramid yarn, in which case one speaks of a "mixed elongate element" or "mixed reinforcing cord".

The "modulus" of a textile cord or yarn is intended to indicate the ratio between toughness (load or force normalised to linear density) and elongation measured at any point of a toughness-elongation curve according to the BISFA standard. This curve is plotted by calculating the first derivative of the toughness-elongation function that defines the aforementioned curve, where the linear density is expressed in Tex. The modulus it is therefore expressed in cN/Tex. In a toughness-elongation graph, the modulus is identified by the slope of the aforementioned curve with respect to the abscissa axis.

By "high modulus" it is meant an initial modulus equal to or greater than 3000 cN/Tex. By "low modulus" it is meant an initial modulus of less than 3000 cN/Tex.

For the measurement of the modulus reference to flat threads/yarns, without twists applied in the test step or in the twisting step, according to the tests regulated by the BISFA.

The elongate element may comprise polymeric and/or metal threads coupled in differently twisted ends. The term "twisting" (or spinning) indicates the spiral winding of the fibres that make up a yarn, if it is single end, or of the component elements (ends) if it is twisted.

The textile-type elongate element is identified with a numerical code that represents the title of the fibre used, the number of ends that contribute to forming the reinforcing element, the twists and winding directions of the individual ends, the twists and the total winding direction of the final member.

By way of example, in the expressions (38x38), (25x25) and in general (nxn), the first number indicates the twists imparted to the yarn or set of yarns or to the end and the second number indicates the twists imparted to the cord after having coupled the ends, expressed in twists per decimeter (dm).

Preferably, the twist imparted respectively to each end and to the set of the ends forming the cord is between 20 and 55 twists per decimeter, equivalent to 200 TPM - 550 TPM (Twist Per Metre).

The elongate element of the textile type is also identified with the title or linear density, expressed in dtex, or mass expressed in grams of a 10000 m long thread. The term "linear density" or "title" of an elongate element or of a thread or of an end indicates the weight of the elongate element or of the thread or of the end per unit of length. For the measurement of linear density, we refer to flat threads/yarns, without twists applied in the test step or in the twisting step, according to the tests regulated by the BISFA (Bureau International pour la Standardisation des Fibres Artificielles).

By way of example, the title of the elongate element may be between 900/n dtex and 12000/n dtex, where n is an integer from 1 to 3, and represents the number of yarn strands twisted together.

The elongate element may be used as it is or be woven into plies, made by interweaving elongate elements in the warp with elongate elements in the weft. The number of elongate elements in the carcass ply arranged per decimeter (also called density), measured along a circumferential direction, is generally between 60 cords/dm and 130 cords/dm, between about 80 and about 120, preferably between about 90 and about 110.

The density of the textile elongate reinforcing elements in the fabric is typically expressed with the identifier F followed by the number of cords arranged per decimeter.

The elongate element or the fabric made with it is subjected to a treatment with a suitable adhesive composition to make it more compatible with the elastomeric composition comprising a predispersion of a diene elastomeric polymer and lignin according to the invention. Typically, the adhesive comprises resorcinol, formaldehyde and latex but any type of adhesive suitable for compatibilising the elongate element or the fabric can equally be used.

Typically, the adhesive is applied by dipping or by spraying, but it is also possible to apply it according to other suitable known techniques.

The elongate element or the fabric made with it may be treated superficially by immersing them in a solution containing said mixture of resorcinol-formaldehyde resin and rubber latex (this mixture being commonly referred to with the expression "resorcinol-formaldehyde latex RFL"), and subsequently subjected to drying. The latex used may be selected, for example, from: vinylpyridine/styrene-butadiene (VP/SBR), styrene-butadiene (SBR), natural rubber latex (NR), carboxylated and hydrogenated acrylonitrile-butadiene (X-HNBR), hydrogenated acrylonitrile (HNBR), acrylonitrile (NBR), ethylenepropylene-diene monomer (EPDM), chlorosulphonated polyethylene (CSM) or a mixture thereof.

Some materials, such as rayon, already acquire optimal properties for adhesion with the elastomeric composition through a single immersion in an RFL-based bath (dipping, one-step process) while others, such as polyesters or aromatic polyamides, bind with greater difficulty to the elastomeric composition and therefore take advantage of particular activating pretreatments of a physical or chemical nature. For example, the elongate elements in polyester or aromatic polyamides are preferably subjected to a surface pre-activation by pre-treatment with a first activating bath (pre-dipping, two-step process) or by ionising ray pre-treatments, with plasma or with solvents.

Generally, after the application of the adhesive, the solvent, typically water, is dried at temperatures around 180°C, with a second heating step around 235°C - 240°C, to partially cross-link the adhesive, and to a final step of relaxation of the material at slightly lower temperatures (for example at 230°C) by slightly reducing the stretching ratios.

The elongate element or the fabric made with it are subsequently subjected to a rubberising operation in which the fibrous material possibly previously impregnated with adhesive agents is then coupled to the elastomeric composition according to the present invention by heating and, preferably, compression according to rubberising processes typically adopted in tire technology, for example by extrusion or calendaring or according to suitable alternative techniques such as solvent casting or spray coating, by means of which they are coated with, or incorporated into, the elastomeric composition comprising a predispersion of a diene elastomeric polymer and lignin according to the invention.

### The tire

According to one embodiment, the tire for vehicle wheels according to the invention comprises
- a carcass structure comprising at least one carcass layer having opposite lateral edges associated with respective bead structures;
- optionally, a belt structure applied in radially outer position to the carcass structure,
- a tread band applied in radially outer position to said carcass structure, and to said belt structure if present, and
- optionally, an under-layer and/or an anti-abrasive elongated element and/or a sidewall and/or a sidewall insert and/or a mini-sidewall and/or an underliner and/or a rubberizing layer and/or flipper and/or chafer and/or a bead filler and/or a sheet.

According to one embodiment, the structural component according to the invention is selected from the group that consists of carcass structure, belt structure, additional belt layer, rubberizing layer, reinforcing layers of the sidewall and of the bead (chafer and flipper).

According to a preferred embodiment, said structural component is an additional belt layer. Said additional belt layer is commonly known as "zero-degree belt".

In the tire according to the invention, the reinforcing elements according to the invention may be used in the carcass structure, and/or in the crossed belt structure and/or in one or both of the flipper and chafer components (if provided).

The carcass structure is intended to confer to the tire the desired characteristics of integrity and structural strength, while the belt structure is also intended to transfer to the carcass structure the lateral and longitudinal stresses to which the tire in operation is subjected following the contact with the road surface, so as to impart thereto the desired performances of adherence, driving stability, controllability, directionality, road holding and comfort. The zero-degree reinforcing layer, when present, is instead intended to limit the radial elongation of the belt structure.

Preferably, said structural component is the carcass structure comprising a plurality of reinforcing elements according to the invention. Preferably, said carcass structure is a radial carcass structure.

Preferably, the plurality of reinforcing elements is incorporated into two carcass plies that are radially superimposed on each other.

Preferably, the belt structure comprises at least one reinforcing element according to the invention wound on the carcass structure according to a substantially circumferential direction winding.

In one embodiment, at least one bead reinforcement layer can be associated with the carcass layer at or in proximity to a respective anchorage structure.

Preferably, said at least one bead reinforcement layer comprises at least one reinforcing element according to the invention.

Said at least one bead reinforcement layer can be interposed between a respective turned-up end flap of said at least one carcass layer and a respective anchorage structure.

More preferably, said at least one bead reinforcement layer can at least partially surround said anchorage structure or bead. Such bead reinforcement layer is also indicated with the term "flipper".

A sidewall reinforcement layer can be associated with the respective turned-up end flap of the at least one carcass layer in axially more external position with respect to the respective anchoring annular structure.

More preferably, said at least one sidewall reinforcement layer can be extended from said carcass structure along the sidewall towards the tread band. Such sidewall reinforcement layer is also twisted with the term "chafer".

In a preferred embodiment, the structural component according to the invention is selected from the group consisting of carcass structure, belt structure, flipper, chafer, and rubberising layers.

The tire according to the invention can be employed on vehicles with two, three or four wheels. The tire according to the invention can be for summer or winter use or for all the seasons.

The tire according to the invention can be a tire for cars, being intended both tires for automobiles, such as for example high-performance tires, tires for light transport vehicles, e.g. vans, campers, pick-up trucks, typically with overall mass at full load equal to or lower than 3500 Kg. tires for heavy transport vehicles are therefore excluded.

The tire according to the invention can be a tire for motorcycles, such as for example motorcycles belonging to the categories: scooters, road enduro, custom, hypersport, supersport, and sport touring. With "tire for motorcycle wheels" it is intended a tire having a high curvature ratio (typically greater than 0.200), capable of reaching high inclination angles (roll angles) during the driving of the motorcycle on a curve.

### DRAWINGS

The description is given hereinafter with reference to the accompanying drawings, provided only for illustrative and, therefore, non-limiting purposes, in which:

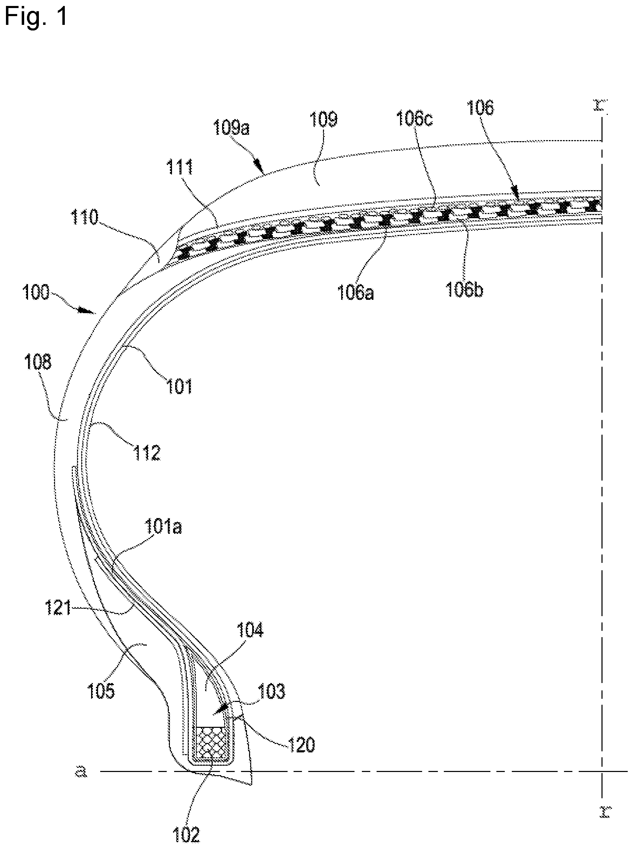

- Figure 1 schematically shows, in half-section, a tire for vehicle wheels according to the present invention.

### DETAILED DESCRIPTION OF THE INVENTION

The present invention will be illustrated in further detail by means of an illustrative embodiment with reference to the enclosed figure 1, where "a" indicates an axial direction and "r" indicates a radial direction. For the sake of simplicity, figure 1 only shows a part of the tire, the remaining non-represented part being identical and arranged symmetrically with respect to the radial direction "r".

The reference number 100 in figure 1 indicates a tire for vehicle wheels, which generally comprises a carcass structure 101 having respectively opposite end flaps engaged with respective anchoring annular structures 102, termed bead cores, possibly associated with a bead filler 104. The zone of the tire comprising the bead core 102 and the filler 104 forms a bead structure 103 intended for anchoring the tire on a corresponding mounting rim, not illustrated. Each bead structure 103 is associated with the carcass structure by folding back the opposite lateral edges of the at least one carcass layer 101 around the bead core 102 so as to form the so-called turn-ups of the carcass 101a, as illustrated in Figure 1.

The carcass structure 101 is possibly associated with a belt structure 106 comprising one or more belt layers 106a, 106b situated in radial superimposition with respect to each other and with respect to carcass structure 101, having reinforcement cords that are typically metallic. Such reinforcement cords can have cross orientation with respect to a circumferential extension direction of the tire 100. By "circumferential" direction it is intended a direction generically directed according to the rotation direction of the tire, or in any case slightly inclined with respect to the rotation direction of the tire.

The belt structure 106 also comprises at least one reinforcement layer 106c that is radially outer with respect to the belt layers 106a, 106b. The radially outer reinforcement layer 106c comprises textile or metallic cords, arranged according to an angle that is substantially zero with respect to the circumferential extension direction of the tire and immersed in the elastomeric material. Preferably, the cords are arranged substantially parallel and side-by-side to form a plurality of turns. Such turns are substantially oriented according to the circumferential direction (typically with an angle between 0° and 5°), such direction normally being termed "zero-degree" with reference to its position with respect to the equatorial plane X-X of the tire. By "equatorial plane" of the tire it is intended a plane perpendicular to the rotation axis of the tire which divides the tire into two symmetrically equal parts.

In radially outer position with respect to the carcass structure 101 and/or if present (as in the illustrated case) to the belt structure 106, a tread band 109 is applied in vulcanised elastomeric compound.

In radially outer position, the tread band 109 has a rolling portion 109a intended to come into contact with the ground. Circumferential grooves, which are connected by transverse notches (not represented in Figure 1) such to define a plurality of blocks of various shape and size distributed in the rolling portion 109a, are generally made in this portion 109a, which for the sake of simplicity in Figure 1 is represented smooth.

In order to optimise the performances of the tread, the tread band can be attained in a two-layer structure.

Such two-layer structure comprises the rolling portion or layer 109a (termed cap) and an under-layer 111 (termed base), attaining the so-called cap-and-base structure. It is thus possible to use an elastomeric material capable of providing a low rolling resistance for the cap 109a and simultaneously high resistance to wear and to the formation of cracks while the elastomeric material of the under-layer 111 can be particularly directed for a low hysteresis in order to cooperate with reducing the rolling resistance. The under-layer 111 made of vulcanised elastomeric compound can be arranged between the belt structure 106 and the rolling portion 109a.

On the lateral surfaces of the carcass structure 101, respective sidewalls 108 of vulcanised elastomeric compound, each extended from one of the lateral edges of the tread band 109 up to the respective bead structure 103, are also applied in axially outer position with respect to said carcass structures 101.

A strip constituted by elastomeric compound 110, commonly known as "mini-sidewall", made of vulcanised elastomeric compound can possibly be present in the zone of connection between the sidewalls 108 and the tread band 109, this mini-sidewall being generally obtained via co-extrusion with the tread band 109 and allowing an improvement of the mechanical interaction between the tread band 109 and the sidewalls 108. Preferably the end portion of the sidewall 108 directly covers the lateral edge of the tread band 109.

In several specific embodiments, such as that illustrated and described herein, the rigidity of the bead 103 can be improved by providing for a reinforcement layer 120 generally known as "flipper" in the bead of the tire.

The flipper 120 is wound around the respective bead core 102 and the bead filler 104 so as to at least partially surround them. The flipper 120 is arranged between the carcass layer 101 and the bead structure 103. Usually, the flipper 120 is in contact with the carcass layer 101 and said bead structure 103. The flipper 120 typically comprises a plurality of metallic or textile cords embedded in a vulcanised elastomeric compound.

In several specific embodiments, such as that illustrated and described herein, the bead structure 103 can also comprise a further reinforcement layer 121 which is generally known with the term "chafer", and has the function of increasing rigidity and integrity of the bead structure 103.

The chafer 121 usually comprises a plurality of cords embedded in a vulcanised elastomeric compound; such cords are generally made of textile material (e.g. aramid or rayon), or of metallic material (e.g. steel cords).

Possibly an anti-abrasive strip 105 is arranged so as to enclose the bead structure 103 along the axially inner, axially outer and radially inner zones of the bead structure 103, thus being interposed between the latter and the rim of the wheel when the tire 100 is mounted on the rim.

A radially inner surface of the tire 100 is also preferably internally coated with a layer of elastomeric material that is substantially air impermeable, or so-called liner 112.

According to a non-shown embodiment, the tire can be a tire for motorcycle wheels. The profile of the cross section of the tire for motorcycle (not illustrated) has a high transverse curvature, since it must ensure a sufficient footprint area in all the inclination conditions of the motorcycle. The transverse curvature is defined by the value of the ratio between the distance f of the top of the tread from the line passing through the laterally opposite ends of the tread itself, measured on the equatorial plane of the tire, and the width C defined by the distance between the laterally opposite ends of the tread itself. With tire with high transverse curvature, it is indicated a tire whose transverse curvature ratio (f/C) is at least 0.20.

The reinforcing elements of the belt structure 106, and/or of the carcass structure 101, and/or of the bead structure 103, such as the flipper 120 and/or the chafer 121, can be advantageously rubber-covered with the elastomeric composition comprising the carbon nanotubes and the predispersion of diene elastomeric polymer and lignin described above, since a lower hysteresis accompanied by a greater conductivity signifies (i) a lower dissipation of energy in the form of heat during operation, preventing the onset of overly high operating temperatures that can risk compromising the integrity of the tire, (ii) a lower fuel consumption, and (iii) a greater dissipation and grounding of the electrostatic charges generated by the rolling of the wheels and by the consequent movement of the vehicle.

The building of the tire 100 as described above, is actuated by assembly of respective semifinished products on a forming drum, not illustrated, by at least one assembly device.

Built and/or assembled on the forming drum is at least one part of the components intended to form the carcass structure 101 of the tire 100. More particularly, the forming drum is adapted to first receive the possible liner 112, and then the carcass ply 101. Subsequently, non-illustrated devices engage one of the anchoring annular structures 102 coaxially around each of the end flaps, they position an external sleeve comprising the belt structure 106 and the tread band 109 in position coaxially centred around the cylindrical carcass sleeve and shape the carcass sleeve according to a toroidal configuration by means of a radial dilation of the carcass ply 101, so as to determine the application thereof against a radially inner surface of the external sleeve.

Following the building of the green tire 100, a moulding and vulcanisation treatment is executed that is aimed to determine the structural stabilisation of the tire 100 by means of vulcanisation of the elastomeric compounds as well as to impart a desired tread design on the tread band 109 and to impart possible distinctive graphic marks at the sidewalls 108.

The present invention will be further illustrated below by means of a number of preparatory examples, which are provided for indicative purposes only and without any limitation of the present invention.

### EXAMPLE 1

### Preparation of a predispersion of a diene elastomeric polymer and lignin comprising 50% w/w of lignin

### Materials

Lignin: lignin from process Softwood Kraft UPM BioPiva^{™} 200 (UPM Biochemicals) having a median particle diameter D50 equal to or greater than 20 microns;

Diene elastomeric polymer: natural rubber from HA latex obtained via centrifugation and stabilised with ammonia (60% by weight - sold by Von Bundit Co. Ltd.);

Anionic surfactant: technical grade sodium dodecylbenzenesulphonate, Thermo Fischer Scientific.

### Predispersion 1 (50% w/w of lignin - 100 phr)

The process of preparation of the predispersion 1 was the following.

Step a1): 95 kg of moist particulate of lignin (about 57% solid content, starting D50 of about 20 microns) were diluted in 95 kg of deionised water; subsequently, 2.85 kg of anionic surfactant were added and the mixture was stirred up to uniformity, thus obtaining 192.85 kg of a crude suspension of lignin SG having a solid lignin content of about 28% by weight.

Step a2): the lignin particles contained in the crude suspension of lignin SG were ground in moist conditions by a cylindrical mill, model ZETA of NETZSCH (NETZSCH-Feinmahltechnik GmbH, Selb, Germany) by employing steel balls with diameter lower than 4 mm so as to reduce the median diameter D50 of the lignin particles to a value equal to or lower than 1.5 microns. In such a manner 192.85 kg of a first suspension S1 were obtained, containing ground lignin (28% by weight) in which the percentage of particles larger than 10 microns was lower than about 2% by weight.

The median particle diameter D50 was measured with laser analyser Malvern Mastersizer 2000 (Malvern Panalytical Ltd., Malvern, Great Britain).

Step b): the first suspension S1 containing ground lignin obtained from step a2) (192.85 kg) was mixed with 90 kg of natural rubber latex (solid content: 60% by weight) by mechanical stirrer, thus obtaining 282.85 kg of a second suspension S2 containing about 19% by weight of ground lignin and about 19% by weight of natural rubber.

Step c): the second suspension S2 containing ground lignin and natural rubber (282.85 kg) was then dried in a static oven at 60°C for a time equal to about 4 hours, up to reaching a moisture content lower than 1% by weight.

The predispersion in flakes thus obtained was then subjected to a further step of compaction by an open mixer with rollers spaced at about 3 mm in order to obtain a predispersion or masterbatch in sheets of 50% natural rubber and 50% lignin by weight.

### EXAMPLE 2

### Use of the predispersion 1 attained in example 1 in the preparation of an elastomeric compound

The predispersion 1 containing lignin according to the example 1 was used for making two vulcanisable elastomeric compounds comprising 30 phr of lignin and variable quantities of carbon nanotubes. The vulcanisable elastomeric compounds of the invention (INV1 and INV2) comprising carbon nanotubes were compared with a vulcanisable elastomeric compound lacking lignin (C1), considered as a conventional reference for structural elements of a tire, and with an elastomeric compound (C2) comprising 60 phr of predispersion 1 without carbon nanotubes.

Reported in the following Table 1 are compositions in phr of the vulcanisable elastomeric compounds C1, C2, INV1 and INV2.

The predispersion 1 is added in a quantity such to provide about 30 phr of natural rubber and about 30 phr of lignin to the compound C2, INV1 and INV2.

**TABLE 1**

| | C1 | C2 | INV1 | INV2 |
|---|---|---|---|---|
| NR | 100 | 70 | 66 | 70 |
| Predispersion 1 | - | 60 | 60 | 60 |
| CB | 55 | 45 | 39 | 45 |
| CNT1 | - | - | 5 | - |
| CNT2 | - | - | - | 3 |
| ZnO | 4.75 | 4.75 | 4.75 | 4.75 |
| Stearic acid | 1.5 | 1.5 | 1.5 | 1.5 |
| 6PPD | 2.5 | 2.5 | 2.5 | 2.5 |
| 65% HMMM | 3 | 3 | 3 | 3 |
| Novolacca | 3 | 3 | 3 | 3 |
| CBS | 1.5 | 1.5 | 1.5 | 1.5 |
| PVI | 0.3 | 0.3 | 0.3 | 0.3 |
| 66% Insoluble Sulfur | 6 | 6 | 6 | 6 |

| | | | | |
|---|---|---|---|---|
| NR: coagulated natural rubber, obtained via coagulation of HA natural rubber latex obtained via centrifuging and stabilised with ammonia (60% by weight - sold by Von Bundit Co. Ltd); Lignin in powder: Softwood Kraft UPM BioPiva^{™} 200 (UPM Biochemicals) having an median particle diameter D50 equal to or greater than 20 microns CB : Carbon black, N326, Cabot Corporation; CNT1 : MultiWall Carbon Nanotubes preparations as described in WO2018/109661, 20% in natural rubber; CNT2 : Tuball^{™} Matrix 615 beta SingleWall Carbon Nanotubes 10% produced by Ocsial Europe S.a.r.l. ZnO : Zinc oxide, Zincl Ossidi; Stearic acid : Stearina, Undesa; 6PPD : N-(1.3-dimethylbutyl)-N'-phenyl-p-phenylenediamine, Solutia Eastman; HMMM 65% : Cyrez 963, Cytec; Novolacca : Alnovol PN 760, Allnex; PVI : cyclohexylthiophthalimide, Santogard PVI; CBS : N-cyclohexylbenzothiazol-2-sulphenamide, Rubenamid C, General Quimica; 66% Insoluble Sulfur: Sulphur, Redball Superfine, International Sulphur Inc. | | | | |

CNT1 is a dispersion of carbon nanotubes in natural rubber which in the compound INV1 provides 1 phr of carbon nanotubes and 4 phr of natural rubber.

CNT2 is a dispersion of carbon nanotubes lacking elastomeric components which in the compound INV2 provides 0.3 phr of carbon nanotubes.

All the components, except for sulfur, of the vulcanisation accelerant (CBS) and of the vulcanisation retardant (PVI) were mixed in an internal mixer (Brabender) for about 10 minutes (1^{st} step).

When the temperature of 135°C is reached, the material was mixed for another minute and then unloaded. The non-completed compound was left to rest for a day, then the following were added: the sulfur, the accelerant (CBS) and the retardant (PVI) and the mixing was carried out in the same mixer at about 60°C for 9 minutes (2^{nd} step). Finally, the compound was vulcanised at 170°C for 10 minutes, so as to be able to measure the static mechanical properties thereof, while the dynamic mechanical properties were measured on the vulcanisable compound.

The static mechanical properties of the compounds of Table 1 were evaluated according to the standard ISO 37-2011 at 23°C, on 5 test pieces Dumbell. In this manner, the following parameters were measured:
- load at 50% elongation (Ca0.5),
- load at 100% elongation (Ca1),
- load at 300% elongation (Ca3),
- load at break (CR), and
- % elongation at break (AR).

The dynamic mechanical properties of dynamic shear modulus G' and Tan delta of the compounds of Table 1 were evaluated by using a rheometer with oscillating chambers by Alpha Technologies R.P.A. 2000 (Rubber Process Analyser) with geometry of the chambers according to that described in the norm ASTM D6601-19 figure 1, by applying the following method.

An approximately cylindrical test sample with volume comprised between 4.6 and 5 cm³ was obtained by punching a sheet with thickness of at least 5 mm of the green vulcanisable elastomeric composition to be characterised. Subsequently, the chambers of the R.P.A. 2000 were preliminarily preheated at 170°C.

The sample was loaded between the chambers of the rheometer and the chambers were closed. Between the sample of the green vulcanisable elastomeric composition and each chamber of the rheometer, two films were interposed to protect the chamber itself: in contact with the compound, a film of Nylon 6.6 cast with thickness of 25 microns about and in contact with the chamber of the rheometer, a polyester film with thickness of about 23 microns. The sample was then vulcanised for a fixed time of 10 minutes at the temperature of 170°C, at the same time recording the vulcanisation curve, i.e. subjecting the sample for the entire time of vulcanisation to a sinusoidal deformation with 7% amplitude and 1.67 Hz frequency.

The temperature of the chambers of the rheometer was then brought to 70°C. After an overall time of 10 minutes from when the temperature of the chambers is set at 70°C, one executes a sequence of dynamic measurements at constant 70°C temperature, sinusoidally stressing the sample under torsion at the fixed frequency of 100 Hz and amplitude progressively increasing from 0.3% to 10%, carrying out 10 stabilisation cycles and 10 measurement cycles for each condition.

Still maintaining the temperature of the chambers of the rheometer at 70°C, one then carries out a dynamic measurement by sinusoidally stressing the sample under torsion at the fixed frequency of 100 Hz and amplitude of 9%, by carrying out 10 stabilisation cycles and 20 measurement cycles.

In this manner, the following parameters were measured, as a mean of that recorded in the 20 measurement cycles:
- dynamic elastic shear modulus G',
- variation of the dynamic elastic shear modulus d_G' between an amplitude of deformation of the sample of 0.5% and one of 10%;
- tan delta at twisting, i.e. the ratio between viscous elastic modulus G" and dynamic elastic modulus G', at an amplitude of the deformation of 9% (hereinbelow Tan delta(9%)).

The dynamic mechanical properties under traction-compression of the compounds of Table 1 were evaluated by using a dynamic device Instron model 1341 in the traction-compression mode with the following modes.

A vulcanised material test piece (170°C for 10 minutes) having a cylindrical shape (length = 25 mm; diameter = 18 mm), preloaded at compression up to a longitudinal deformation of 25% with respect to the initial length and maintained at the pre-established temperature (e.g. 70°C) for the entire duration of the test.

After a wait time of 2 minutes followed by a mechanical pre-conditioning of 125 cycles at 100Hz at 5% amplitude of deformation with respect to the length under pre-load, the test piece was subjected to a dynamic sinusoidal stress having an amplitude of ± 3.5% with respect to the pre-load length, with a frequency of 100Hz.

In this manner, the following parameters were measured:
- dynamic elastic modulus E',
- tan delta, i.e. the ratio between the viscous elastic modulus E" and the dynamic elastic modulus E'.

The values of electrical surface resistivity and volume resistivity of the compounds of Table 1 were determined in accordance with the experimental procedures described in the norms UNI 4288-72.

Reported in the following Table 2 are the results obtained from the characterizations carried out.

**TABLE 2**

| | C1 | C2 | INV1 | INV2 |
|---|---|---|---|---|
| Ca0.5 MPa | 1.96 | 1.90 | 1.99 | 2.26 |
| Ca1 MPa | 3.13 | 3.40 | 3.55 | 3.84 |
| Ca3 MPa | 12.31 | 10.02 | 10.27 | 10.55 |
| CR MPa | 20.97 | 15.40 | 16.69 | 15.17 |
| AR % | 488.2 | 469.9 | 485.8 | 450.4 |
| d_G'(0.5-10) (MPa) | 6.18 | 3.19 | 3.56 | 4.33 |
| G' (9%) (MPa) | 2.71 | 2.04 | 2.09 | 2.22 |
| Tan Delta(9%) | 0.27 | 0.19 | 0.20 | 0.21 |
| E' MPa | 8.04 | 7.17 | 7.15 | 7.70 |
| Tan Delta | 0.121 | 0.101 | 0.097 | 0.112 |
| Surface resistivity (kΩ) | 265 | 77363 | 654 | 224 |
| Volume resistivity (kΩ/m) | 7 | 2814 | 19 | 8 |

The results of Table 2 have demonstrated that the compounds of the invention (INV1 and INV2), comprising carbon nanotubes, both show a good conductivity and a considerable reduction of the hysteresis, simultaneously maintaining good mechanical characteristics.

The comparison compound C2 lacks carbon nanotubes, even if it showed good mechanical characteristics and the same reduction of hysteresis instead showed poor conductivity.

### EXAMPLE 3

The vulcanisable elastomeric compounds of example 2 were used for the rubber-covering of textile cords of polyester or rayon.

The adhesion force of the vulcanised rubberizing layer at the cords was then measured according to the method ASTM D4776 (H-test) which determines the force required for removing the cord from the block of elastomeric material of the sample after vulcanisation.

The textile cords were previously treated via immersion in an adhesive composition RFL, comprising a styrene-butadiene-vinyl pyridine, resorcinol and formaldehyde polymer latex, and subsequent heating to about 200°-250°C for the fixing.

The cords thus treated were rubber-covered with the vulcanisable elastomeric compounds of example 2 to give rise to the representative samples of reinforcing tire elements.

The samples were prepared by following the indications reported in ASTM D4776 and subjected to adhesion evaluation, in accordance with the procedure, on test pieces of length equal to 9.52 mm.

The results, expressed by normalising to 100 the value of the reference compound C1, are summarised in the following table 3.

**TABLE 3**

| Cord material | C1 | C2 | INV1 | INV2 |
|---|---|---|---|---|
| Polyester | 100 | 176 | 220 | 200 |
| Rayon | 100 | 292 | 441 | 327 |

The results of the table 3 have demonstrated a surprising and unexpected increase of the adhesion force of the compounds according to the invention INV1 and INV2, both at the cords made of polyester, and at the cords made of rayon, even improved with respect to the already-improved value of the compounds C2.

The surprising and unexpected increase of the adhesion force of the compound according to the invention INV1 and INV2 convinces the Applicant - based on the experience thereof - that it is possible to omit from the rubber-covering compound the reinforcement resins comprising methylene acceptors and donors conventionally used in the rubber-covering compound.

## Claims

1. A tire for vehicle wheels which comprises at least one structural component comprising at least one reinforcing element constituted by an elongate element coated with, or embedded in, a vulcanised elastomeric compound obtained by vulcanising an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
wherein at least 50 phr of said diene elastomeric polymer of the elastomeric composition is constituted by natural or synthetic isoprene rubber.

2. A structural component comprising at least one reinforcing element constituted by an elongate element coated with, or embedded in, a vulcanised elastomeric compound obtained by vulcanising an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
wherein at least 50 phr of said diene elastomeric polymer of the elastomeric composition is constituted by natural or synthetic isoprene rubber.

3. A reinforcing element constituted by an elongate element coated with, or embedded in, a vulcanised elastomeric compound obtained by vulcanising an elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
wherein at least 50 phr of said diene elastomeric polymer of the elastomeric composition is constituted by natural or synthetic isoprene rubber.

4. An elastomeric composition comprising per 100 phr of diene elastomeric polymer:
(i) a predispersion of a diene elastomeric polymer and lignin, in an amount to provide the elastomeric composition with 100 to 10 phr of diene elastomeric polymer and a quantity of lignin equal to or greater than 20 phr,
(ii) from 0 to 90 phr of a diene elastomeric polymer,
(iii) at least 30 phr of a carbon black reinforcing filler,
(iv) optionally, a reinforcing resin comprising at least 0.5 phr of a methylene acceptor compound associated with at least 0.2 phr of a methylene donor compound,
(v) from 0.1 to 10 phr of carbon nanotubes, and
(vi) from 0.1 to 12 phr of at least one vulcanising agent,
wherein at least 50 phr of said diene elastomeric polymer of the elastomeric composition is constituted by natural or synthetic isoprene rubber.

5. The tire for vehicle wheels according to claim 1 or the structural component according to claim 2 or the reinforcing element according to claim 3 or the elastomeric composition according to claim 4, **characterised in that** said predispersion of diene elastomeric polymer and lignin is added to the elastomeric composition in a quantity such to provide, to the elastomeric composition itself, from 100 to 20 phr of diene elastomeric polymer, preferably from 100 to 30 phr of diene elastomeric polymer.

6. The tire for vehicle wheels according to claim 1 or the structural component according to claim 2 or the reinforcing element according to claim 3 or the elastomeric composition according to claim 4, **characterised in that** at least 60 phr, preferably at least 70 phr, and more preferably at least 80 phr of said diene elastomeric polymer of said elastomeric composition is constituted by natural or synthetic isoprene rubber, preferably natural.

7. The tire for vehicle wheels according to claim 1 or the structural component according to claim 2 or the reinforcing element according to claim 3 or the elastomeric composition according to claim 4, **characterised in that** said predispersion of diene elastomeric polymer and lignin is added to the elastomeric composition in a quantity such to provide, to the elastomeric composition itself, at least 30 phr of lignin, preferably from 30 phr to 60 phr of lignin, more preferably from 30 phr to 50 phr of lignin.

8. The tire for vehicle wheels according to claim 1 or the structural component according to claim 2 or the reinforcing element according to claim 3 or the elastomeric composition according to claim 4, **characterised in that** said predispersion of diene elastomeric polymer and lignin comprises a quantity of lignin equal to or greater than 45 phr, preferably equal to or greater than 50 phr, still more preferably equal to or greater than 60 phr and up to 160 phr.

9. The tire for vehicle wheels according to claim 1 or the structural component according to claim 2 or the reinforcing element according to claim 3, **characterised in that** said elongate element is made with a polymeric material selected from the group which comprises polyester, rayon, lyocell and polyamide or with metallic material selected from the group which comprises steel and steel coated with copper/zinc, zinc/manganese, zinc/molybdenum/cobalt metal alloys.

10. The tire for vehicle wheels according to claim 1 wherein said structural element is selected from the group that consists of carcass structure, belt structure, additional belt layer, rubberizing layer, sidewall reinforcement layer or chafer, and bead reinforcement layer or flipper.

## Patentansprüche

1. Reifen für Fahrzeugräder, der mindestens eine Strukturkomponente umfasst, die mindestens ein Verstärkungselement umfasst, das aus einem länglichen Element besteht, das mit einer vulkanisierten elastomeren Verbindung beschichtet oder darin eingebettet ist, die durch Vulkanisieren einer elastomeren Zusammensetzung erhalten wird, die pro 100 phr eines elastomeren Dienpolymers Folgendes umfasst:
(i) eine Vordispersion aus einem elastomeren Dienpolymer und Lignin in einer Menge, dass die elastomere Zusammensetzung mit 100 bis 10 phr eines elastomeren Dienpolymers und einer Menge Lignin gleich oder größer als 20 phr bereitgestellt wird,
(ii) 0 bis 90 phr eines elastomeren Dienpolymers,
(iii) mindestens 30 phr eines rußhaltigen verstärkenden Füllstoffs,
(iv) optional ein verstärkendes Harz, das mindestens 0,5 phr einer Methylenakzeptorverbindung umfasst, die mindestens 0,2 phr einer Methylendonorverbindung zugeordnet ist,
(v) 0,1 bis 10 phr Kohlenstoffnanoröhren und
(vi) 0,1 bis 12 phr mindestens eines Vulkanisationsmittels,
wobei mindestens 50 phr des elastomeren Dienpolymers der elastomeren Zusammensetzung aus natürlichem oder synthetischem Isoprenkautschuk bestehen.

2. Strukturkomponente, die mindestens ein Verstärkungselement umfasst, das aus einem länglichen Element besteht, das mit einer vulkanisierten elastomeren Verbindung beschichtet oder darin eingebettet ist, die durch Vulkanisieren einer elastomeren Zusammensetzung erhalten wird, die pro 100 phr eines elastomeren Dienpolymers Folgendes umfasst:
(i) eine Vordispersion aus einem elastomeren Dienpolymer und Lignin in einer Menge, dass die elastomere Zusammensetzung mit 100 bis 10 phr eines elastomeren Dienpolymers und einer Menge Lignin gleich oder größer als 20 phr bereitgestellt wird,
(ii) 0 bis 90 phr eines elastomeren Dienpolymers,
(iii) mindestens 30 phr eines rußhaltigen verstärkenden Füllstoffs,
(iv) optional ein verstärkendes Harz, das mindestens 0,5 phr einer Methylenakzeptorverbindung umfasst, die mindestens 0,2 phr einer Methylendonorverbindung zugeordnet ist,
(v) 0,1 bis 10 phr Kohlenstoffnanoröhren und
(vi) 0,1 bis 12 phr mindestens eines Vulkanisationsmittels,
wobei mindestens 50 phr des elastomeren Dienpolymers der elastomeren Zusammensetzung aus natürlichem oder synthetischem Isoprenkautschuk bestehen.

3. Verstärkungselement, das aus einem länglichen Element besteht, das mit einer vulkanisierten elastomeren Verbindung beschichtet oder darin eingebettet ist, die durch Vulkanisieren einer elastomeren Zusammensetzung erhalten wird, die pro 100 phr eines elastomeren Dienpolymers Folgendes umfasst:
(i) eine Vordispersion aus einem elastomeren Dienpolymer und Lignin in einer Menge, dass die elastomere Zusammensetzung mit 100 bis 10 phr eines elastomeren Dienpolymers und einer Menge Lignin gleich oder größer als 20 phr bereitgestellt wird,
(ii) 0 bis 90 phr eines elastomeren Dienpolymers,
(iii) mindestens 30 phr eines rußhaltigen verstärkenden Füllstoffs,
(iv) optional ein verstärkendes Harz, das mindestens 0,5 phr einer Methylenakzeptorverbindung umfasst, die mindestens 0,2 phr einer Methylendonorverbindung zugeordnet ist,
(v) 0,1 bis 10 phr Kohlenstoffnanoröhren und
(vi) 0,1 bis 12 phr mindestens eines Vulkanisationsmittels,
wobei mindestens 50 phr des elastomeren Dienpolymers der elastomeren Zusammensetzung aus natürlichem oder synthetischem Isoprenkautschuk bestehen.

4. Elastomerzusammensetzung, die pro 100 phr eines elastomeren Dienpolymers Folgendes umfasst:
(i) eine Vordispersion aus einem elastomeren Dienpolymer und Lignin in einer Menge, dass die elastomere Zusammensetzung mit 100 bis 10 phr eines elastomeren Dienpolymers und einer Menge Lignin gleich oder größer als 20 phr bereitgestellt wird,
(ii) 0 bis 90 phr eines elastomeren Dienpolymers,
(iii) mindestens 30 phr eines rußhaltigen verstärkenden Füllstoffs,
(iv) optional ein verstärkendes Harz, das mindestens 0,5 phr einer Methylenakzeptorverbindung umfasst, die mindestens 0,2 phr einer Methylendonorverbindung zugeordnet ist,
(v) 0,1 bis 10 phr Kohlenstoffnanoröhren und
(vi) 0,1 bis 12 phr mindestens eines Vulkanisationsmittels,
wobei mindestens 50 phr des elastomeren Dienpolymers der elastomeren Zusammensetzung aus natürlichem oder synthetischem Isoprenkautschuk bestehen.

5. Reifen für Fahrzeugräder nach Anspruch 1 oder Strukturkomponente nach Anspruch 2 oder Verstärkungselement nach Anspruch 3 oder Elastomerzusammensetzung nach Anspruch 4, **dadurch gekennzeichnet, dass** die Vordispersion aus elastomerem Dienpolymer und Lignin zu der elastomeren Zusammensetzung in einer solchen Menge hinzugefügt wird, dass der elastomeren Zusammensetzung selbst 100 bis 20 phr eines elastomeren Dienpolymers, vorzugsweise 100 bis 30 phr eines elastomeren Dienpolymers bereitgestellt wird.

6. Reifen für Fahrzeugräder nach Anspruch 1 oder Strukturkomponente nach Anspruch 2 oder Verstärkungselement nach Anspruch 3 oder Elastomerzusammensetzung nach Anspruch 4, **dadurch gekennzeichnet, dass** mindestens 60 phr, vorzugsweise mindestens 70 phr, und bevorzugter mindestens 80 phr des elastomeren Dienpolymers der elastomeren Zusammensetzung aus natürlichem oder synthetischem Isoprenkautschuk, vorzugsweise natürlichem, bestehen.

7. Reifen für Fahrzeugräder nach Anspruch 1 oder Strukturkomponente nach Anspruch 2 oder Verstärkungselement nach Anspruch 3 oder Elastomerzusammensetzung nach Anspruch 4, **dadurch gekennzeichnet, dass** die Vordispersion aus elastomerem Dienpolymer und Lignin zu der elastomeren Zusammensetzung in einer solchen Menge hinzugefügt wird, dass der elastomeren Zusammensetzung selbst mindestens 30 phr Lignin, vorzugsweise 30 phr bis 60 phr Lignin, bevorzugter 30 phr bis 50 phr Lignin bereitgestellt wird.

8. Reifen für Fahrzeugräder nach Anspruch 1 oder Strukturkomponente nach Anspruch 2 oder Verstärkungselement nach Anspruch 3 oder Elastomerzusammensetzung nach Anspruch 4, **dadurch gekennzeichnet, dass** die Vordispersion aus elastomerem Dienpolymer und Lignin eine Menge an Lignin umfasst, die gleich oder größer als 45 phr, vorzugsweise gleich oder größer als 50 phr, noch bevorzugter gleich oder größer als 60 phr und bis zu 160 phr ist.

9. Reifen für Fahrzeugräder nach Anspruch 1 oder Strukturkomponente nach Anspruch 2 oder Verstärkungselement nach Anspruch 3, **dadurch gekennzeichnet, dass** das längliche Element mit einem polymeren Material, das aus der Gruppe ausgewählt ist, die Polyester, Kunstseide, Lyocell und Polyamid umfasst, oder mit einem metallischen Material hergestellt ist, das aus der Gruppe ausgewählt ist, die Stahl und mit Kupfer/Zink-, Zink/Mangan-, Zink/Molybdän/Kobalt-Metalllegierungen beschichteten Stahl umfasst.

10. Reifen für Fahrzeugräder nach Anspruch 1, wobei das Strukturelement ausgewählt ist aus der Gruppe, die aus Karkassenstruktur, Gürtelstruktur, zusätzlicher Gürtelschicht, Gummierungsschicht, Seitenwandverstärkungsschicht oder Chafer und Wulstverstärkungsschicht oder Flipper besteht.

## Revendications

1. Pneumatique pour roues de véhicule, qui comprend au moins un composant structurel comprenant au moins un élément de renforcement constitué d'un élément allongé enrobé ou noyé dans un composé élastomère vulcanisé obtenu par vulcanisation d'une composition élastomère comprenant, pour 100 pce de polymère élastomère diénique :
(i) une prédispersion d'un polymère élastomère diénique et de lignine, en une quantité permettant de fournir à la composition élastomère 100 à 10 pce de polymère élastomère diénique et une quantité de lignine égale ou supérieure à 20 pce,
(ii) de 0 à 90 pce d'un polymère élastomère diénique,
(iii) au moins 30 pce d'une charge renforçante à base de noir de carbone,
(iv) éventuellement, une résine de renforcement comprenant au moins 0,5 pce d'un composé accepteur de méthylène associé à au moins 0,2 pce d'un composé donneur de méthylène,
(v) de 0,1 à 10 pce de nanotubes de carbone, et
(vi) de 0,1 à 12 pce d'au moins un agent de vulcanisation,
dans lequel au moins 50 pce dudit polymère élastomère diénique de la composition élastomère sont constitués de caoutchouc isoprène naturel ou synthétique.

2. Composant structurel comprenant au moins un élément de renforcement constitué d'un élément allongé enrobé ou noyé dans un composé élastomère vulcanisé obtenu par vulcanisation d'une composition élastomère comprenant, pour 100 pce de polymère élastomère diénique :
(i) une prédispersion d'un polymère élastomère diénique et de lignine, en une quantité permettant de fournir à la composition élastomère 100 à 10 pce de polymère élastomère diénique et une quantité de lignine égale ou supérieure à 20 pce,
(ii) de 0 à 90 pce d'un polymère élastomère diénique,
(iii) au moins 30 pce d'une charge renforçante à base de noir de carbone,
(iv) éventuellement, une résine de renforcement comprenant au moins 0,5 pce d'un composé accepteur de méthylène associé à au moins 0,2 pce d'un composé donneur de méthylène,
(v) de 0,1 à 10 pce de nanotubes de carbone, et
(vi) de 0,1 à 12 pce d'au moins un agent de vulcanisation,
dans lequel au moins 50 pce dudit polymère élastomère diénique de la composition élastomère sont constitués de caoutchouc isoprène naturel ou synthétique.

3. Élément de renforcement constitué d'un élément allongé enrobé ou noyé dans un composé élastomère vulcanisé obtenu par vulcanisation d'une composition élastomère comprenant, pour 100 pce de polymère élastomère diénique :
(i) une prédispersion d'un polymère élastomère diénique et de lignine, en une quantité permettant de fournir à la composition élastomère 100 à 10 pce de polymère élastomère diénique et une quantité de lignine égale ou supérieure à 20 pce,
(ii) de 0 à 90 pce d'un polymère élastomère diénique,
(iii) au moins 30 pce d'une charge renforçante à base de noir de carbone,
(iv) éventuellement, une résine de renforcement comprenant au moins 0,5 pce d'un composé accepteur de méthylène associé à au moins 0,2 pce d'un composé donneur de méthylène,
(v) de 0,1 à 10 pce de nanotubes de carbone, et
(vi) de 0,1 à 12 pce d'au moins un agent de vulcanisation,
dans lequel au moins 50 pce dudit polymère élastomère diénique de la composition élastomère sont constitués de caoutchouc isoprène naturel ou synthétique.

4. Composition élastomère comprenant, pour 100 pce de polymère élastomère diénique :
(i) une prédispersion d'un polymère élastomère diénique et de lignine, en une quantité permettant de fournir à la composition élastomère 100 à 10 pce de polymère élastomère diénique et une quantité de lignine égale ou supérieure à 20 pce,
(ii) de 0 à 90 pce d'un polymère élastomère diénique,
(iii) au moins 30 pce d'une charge renforçante à base de noir de carbone,
(iv) éventuellement, une résine de renforcement comprenant au moins 0,5 pce d'un composé accepteur de méthylène associé à au moins 0,2 pce d'un composé donneur de méthylène,
(v) de 0,1 à 10 pce de nanotubes de carbone, et
(vi) de 0,1 à 12 pce d'au moins un agent de vulcanisation,
dans lequel au moins 50 pce dudit polymère élastomère diénique de la composition élastomère sont constitués de caoutchouc isoprène naturel ou synthétique.

5. Pneumatique pour roues de véhicule selon la revendication 1 ou composant structurel selon la revendication 2 ou élément de renforcement selon la revendication 3 ou composition élastomère selon la revendication 4, caractérisé(e) en ce que ladite prédispersion de polymère élastomère diénique et de lignine est ajoutée à la composition élastomère en une quantité telle qu'elle apporte à la composition élastomère elle-même de 100 à 20 pce de polymère élastomère diénique, de préférence de 100 à 30 pce de polymère élastomère diénique.

6. Pneumatique pour roues de véhicule selon la revendication 1 ou composant structurel selon la revendication 2 ou élément de renforcement selon la revendication 3 ou composition élastomère selon la revendication 4, caractérisé(e) en ce qu'au moins 60 pce, de préférence au moins 70 pce, et plus préférentiellement au moins 80 pce dudit polymère élastomère diénique de ladite composition élastomère sont constitués de caoutchouc isoprène naturel ou synthétique, de préférence naturel.

7. Pneumatique pour roues de véhicule selon la revendication 1 ou composant structurel selon la revendication 2 ou élément de renforcement selon la revendication 3 ou composition élastomère selon la revendication 4, caractérisé(e) en ce que ladite prédispersion de polymère élastomère diénique et de lignine est ajoutée à la composition élastomère en une quantité telle qu'elle apporte à la composition élastomère elle-même au moins 30 pce de lignine, de préférence de 30 pce à 60 pce de lignine, plus préférentiellement de 30 pce à 50 pce de lignine.

8. Pneumatique pour roues de véhicule selon la revendication 1 ou composant structurel selon la revendication 2 ou élément de renforcement selon la revendication 3 ou composition élastomère selon la revendication 4, caractérisé(e) en ce que ladite prédispersion de polymère élastomère diénique et de lignine comprend une quantité de lignine égale ou supérieure à 45 pce, de préférence égale ou supérieure à 50 pce, encore plus préférentiellement égale ou supérieure à 60 pce et jusqu'à 160 pce.

9. Pneumatique pour roues de véhicule selon la revendication 1 ou composant structurel selon la revendication 2 ou élément de renforcement selon la revendication 3, **caractérisé en ce que** ledit élément allongé est réalisé avec un matériau polymère choisi dans le groupe qui comprend le polyester, la rayonne, le lyocell et le polyamide ou avec un matériau métallique choisi dans le groupe qui comprend l'acier et l'acier revêtu d'alliages métalliques cuivre/zinc, zinc/manganèse, zinc/molybdène/cobalt.

10. Pneumatique pour roues de véhicule selon la revendication 1 , dans lequel ledit élément structurel est choisi dans le groupe qui consiste en la structure de carcasse, la structure de ceinture, la couche de ceinture supplémentaire, la couche de caoutchouc, la couche de renforcement de paroi latérale ou bandelette talon, et la couche de renforcement de talon ou languette.
